# EUROPEAN PATENT SPECIFICATION

(11) **EP 2 119 123 B1**
(45) Date of publication and mention of the grant of the patent: **07.03.2012**
(21) Application number: 08700235.8
(22) Date of filing: 01.01.2008
(51) Int. Cl.: H04L 12/40, H04L 12/24, G02B 6/28, H04B 10/17

(54) **TECHNIQUE FOR MANAGING OPTICAL NETWORKS**
TECHNIK ZUR VERWALTUNG VON OPTISCHEN NETZWERKEN
TECHNIQUE DE GESTION DE RÉSEAUX OPTIQUES

(30) Priority: 01.02.2007 IL 18113507
(43) Date of publication of application: 18.11.2009
(73) Proprietor: ECI Telecom Ltd., 49517 Petach Tikva (IL)
(72) Inventor: MAHLAB, Uri, 60414 Or-yehuda (IL)
(74) Representative: Modiano, Micaela Nadia
(86) International application number: PCT/IL2008/000001
(87) International publication number: WO 2008/093324

(56) References cited:
- EP-A- 1 139 588
- US-A- 5 712 932
- US-B1- 6 907 159

## Description

### Field of the Invention

The invention relates to techniques for managing modem optical networks and their elements, for example for securing from invasion.

### Background of the invention

Modem optical networks comprise a great number of network elements interconnected by optical fiber links into various configurations, the most popular ones being a point-to-point configuration, a ring-like configuration and a mesh configuration. The optical fiber links of modem optical networks are normally capable of conveying a plurality of optical channels using a plurality of specified different optical wavelengths. Optical fiber links of existing optical networks can be considered as practically open optical conduits, since no protection presently exists against a potential intruder/attacker. The attacker may succeed to introduce into the network a pirate (foreign, malicious) optical signal using any optical wavelength principally transmittable via the fiber links. Such a pirate signal, if having a considerable power and/or amplified by a number of amplifiers along its transmission path in the network, may easily destroy operation of the network.

Several patents relevant to the invention have been uncovered.

US patent 6374019 describes a multi-wavelength selective switch utilizing wavelength selective optical amplifiers, such as current controlled distributed Bragg-reflector (DBR) amplifiers or quarter-wavelength chirping amplifiers in order to differentially amplify the wavelength division multiplexed signals in different waveguides of the switch, for equalizing power of different wavelengths signals ( in case a signal of a specific wavelength is divided between some waveguides).

A number of required wavelength selective optical amplifiers in each waveguide of the US 6374019 is preferably the same as the number of wavelengths, and therefore each of such amplifiers is actually controlled to perform the required amplification of a specific selected wavelength. The mentioned amplifiers are utilized for selectively compensating intensity of light in different waveguides.

US2003016431A (to CoAdna Photonics) describes an apparatus for processing an optical beam, which has at least one variable optical element to dynamically alter the polarization state of a polarized optical beam to form a polarization-altered optical beam. A polarization analyzer is operative, in conjunction with at least one variable optical element and wave plate to alter the transmitted amplitude of the polarization-altered optical beam as a function of wavelength, and thereby produce an output optical beam with transmitted amplitude adjusted as a function of wavelength. The apparatus is a passive optical fiber and does not comprise amplifiers.

JP2006243571A2 (to Fujitsu) describes a small and inexpensive wavelength selective switch WSS capable of accurately monitoring the power of each wavelength channel guided to a plurality of output ports. This WSS separates WDM light emitted from the input fiber of a fiber collimator array with a diffraction grating in accordance with wavelengths, and reflects each wavelength channel radiating in different directions with corresponding MEMS mirrors of a mirror array. Each MEMS mirror is set in the angle of the reflection area correspondingly to the position of output ports that are set in the output side of the incident wavelength channel. Each wavelength channel reaching the target output port is each partly reflected on the end face of the output fiber, with the reflected light returned to the input port and sent to a channel monitor through an optical circulator. Consequently, the optical power corresponding to each wavelength channel is monitored. No amplification is proposed for it.

US607159B1 (to Hani) discloses an arrangement for a configurable optical add/drop multiplexer (OADM) assembly. The configurable OADM assembly comprises at least one configurable optical add/drop multiplexer (C-OADM) device and at least one optical switch associated with the C-OADM devices. The switches can be configured so that some of the C-OADM devices can be selected to carry out wavelength operations, Each of the selected C-OADM devices may be further configured to perform wavelength manipulations such as dropping a wavelength channel, tapping a wavelength channel, adding a wavelength channel with full power level, and a combination thereof.

EP1139588A1 (to Hitachi) discloses an optical transmission system which is arranged to have an optical signal expander module having a group of wavelength bands. This expander is served to solve the problem of the dispersion and realize both the long distance and the high density of the wavelength division multiplexing that can be traded off.

### Object and Summary of the invention

It is the object of the present invention to provide a technique for managing optical networks and their nodes, preferably for securing from invasion performed by outside attackers.

To the best of the Applicant's knowledge, none of the prior art references presents a network solution (a method or a configuration) suitable for preventing or overcoming attacks on an optical communication network.

Similarly, none of the prior art references arrives to designing a controllable piece of optical network equipment simultaneously possessing and combining both its conventional regular function required for optical communication networks and a novel feature allowing the use of such a piece for flexible managing optical networks and in particular for securing the network traffic from invasion.

The above object can be achieved by providing a) a method for managing an optical network, especially in cases of intruders' attacks, b) the optical network or part of such a network, adapted to be controlled and protected against various artifacts or attacks, and c) a new type of network equipment reconfigurable so as to allow operation in the network/at a specific network section only at such wavelengths which are hallowed in the network or in a specific network section respectively.

According to a first aspect of the invention, there is provided a method for managing a group of network nodes in a multi-channel optical communication network comprising a plurality of network nodes and a number of optical fiber links, wherein the group comprises at least one network node,
the method comprising:
per each specific node of said group, providing one or more wavelength selective optical amplifiers WSOA respectively connected between said specific network node and one or more optical fiber link incoming said specific network node;
providing a network controller NC adapted to hold and update control information about optical channels allowed in said one or more optical fiber links incoming the network nodes of the group, and to supply each of said wavelength selective amplifiers WSOA with suitable control information concerning the incoming optical fiber link associated therewith;
at each of said wavelength selective amplifiers WSOA, in response to the control information received from the NC, blocking any incoming wavelength except for wavelengths assigned to the optical channels allowed in the optical fiber link incoming said WSOA.

The method is advantageous for securing/protecting network nodes and networks against invasion. The invasion (or attack) is to be understood as a non-authorized insertion into the network of one or more optical signals using one or more optical wavelengths transmittable via the optical fiber links of the network.

An allowed or working optical channel is to be understood as an optical channel expected (pre-provisioned say by a network designer for a specific network) at a particular optical fiber link in the network.

The wavelengths which are blocked at the WSOAs can be considered non-allowed by the NC; they are usually so-called spare (non-active, non-working) wavelengths which are not assigned to the optical channels allowed in the optical fiber links incoming the network nodes of the group.

The network may be a ring-like network, a point-to point network, a mesh -like network or a mixed type network.

The network nodes are preferably selected from a collection comprising optical or optical/electrical elements being adapted to perform various functions such as: compensating, amplifying, switching, restoring, performing wavelength conversion of incoming optical signals, etc.

Preferably, the method comprises additional steps, which can be used for detecting an invasion:
- determining whether one or more of the wavelengths blocked by any of said WSOA carry optical signals, for example foreign (non-expected, undesired) signals,
- if in the affirmative, issuing an indication signal to the network controller NC, informing about the one or more of the blocked wavelengths where said signals have been determined.

The detection of optical signals in the blocked optic channels can be performed by power detection and further comparison of the detected power level with a selected reference. For example, a power level detected in one blocked optic channel can be compared either with a predetermined threshold or with a power level detected in at least one other blocked optic channel.

In s specific case, the method may further comprise making a decision that an attack has been undertaken via said one or more of the blocked wavelengths, and initiating one or more security measures.

Such a decision can be made at the NC, and the NC can initiate the security measures; said measures may for example comprise:
- wavelength conversion of a working channel (can be performed, for example, when an attacked channel is spectrally adjacent to a working channel and may therefore affect it);
- selecting an alternative path in the network to avoid possible damage to the working traffic by the attacked channel(s).

However, it may happen that any of the allowed (working) channels is attacked by an intruder, or carry any non-typical or degraded signal.

To detect and overcome such a situation, the method further comprises a step of analyzing optical signals carried by one or more of the allowed (working) channels, and possibly comprises taking security measures whenever an attack of any working optical channel is detected.

To perform the analyzing function, the method may comprise a step of providing one or more channel monitoring units for monitoring optical signals at least in one or more of said allowed optic channels, each of the channel monitors being capable of producing an alarm signal in case an optical signal transmitted in a specific allowed optic channel does not satisfy one or more predetermined criteria. The criteria are preferably predetermined threshold values of Quality Of Service(QOS), such as a Bit Error Rate (BER) threshold value or the like.

The alarm signal is preferably reported to the network controller NC, where a decision is to be made and suitable security measures are supposed to be taken if the NC determines an attack.

Optionally, the method may comprise providing one or more local controllers LC, preferably and respectively associated with one or more of said WSOAs and adapted to collect alarm signals from said respective channel monitoring units. The local controller LC should be adapted to take immediate security measures at the place where a problem/ an attack is detected. Namely, in case the alarm signal is received with respect to a particular working channel in a specific incoming fiber optic link, the LC will be adapted to issue a local control signal to the associated WSOA to block said particular working channel.

The alarm signal can thus be reported either to the network controller NC, or to the local controller LC if provided at the optical fiber link where the attack is detected, or to both.

At least the following security measures can be taken when invasion (attack) is determined to take place in a working channel:
a) applying updated control signals to at least one of the WSOAs, thereby causing blocking of the attacked working channel by said at least one WSOA; this measure can be performed both locally by the local controller LC, and centrally by the network controller NC;
b) performing a wavelength conversion operation with respect to the attacked working channel, by transmitting traffic of the attacked working channel over a spare optic channel (spare carrier wavelength), which will become allowed; this measure can preferably be performed with the aid of the NC;
c) rerouting traffic of the attacked working channel via other sections of the network, not subjected to the attack; such a measure may only be performed by the NC.

According to a second aspect of the invention, there is provided a network section in a multi-channel optical network comprising a plurality of network nodes and a number of optical fiber links, the network section comprising:
a group of one or more network nodes wherein, at each specific network node of the group, at least one optical fiber link incoming the specific network node is provided with at least one wavelength selective optical amplifier WSOA,
a network controller NC adapted to hold and update control information about optical channels allowed in said at least one optical fiber link incoming said at least one network node of the group, and to provide each of said at least one wavelength selective amplifier WSOA with suitable control information concerning the optic fiber link associated therewith;
wherein each of said at least one WSOA is adapted to be controlled by said network controller NC so as to amplify only wavelengths assigned to the optical channels allowed in the optic fiber link associated with said WSOA, while blocking any other wavelengths.

Such a network section (and each node of the section) becomes secured against any excessive, undesired, malicious or foreign signals which may be present/be inserted in the network, and prevents non-desired amplifying and forwarding such signals to the optical network.

An optical fiber link incoming a network node is to be understood as an optical communication link intended for transmitting traffic incoming said network node.

Preferably, the proposed security arrangement is most applicable to those network sections which are maximally subjected to outside attacks: for example, comprising long optical paths passing via territories where inspection can hardly be performed and thus intrusion may not be excluded, and/or comprising network node(s) which are connected to external network(s) via which malicious signals may penetrate into our optical network.

According to one specific embodiment, said secured network section may constitute (cover) the whole said optical network; according to another specific embodiment, the secured network section may comprise a single network node, preferably a border node between two networks.

In one embodiment of the network, the network controller NC forms part of a centralized network management System NMS and holds topology data on at least said network section and, according to said topology data,
a) considers working optical channels expected/provisioned to pass via a specific optical fiber link to be allowed optical channels for that specific optical fiber link;
b) provides control of the WSOAs in the network section according to the topology data, by issuing respective control signals.

In other words, NC considers working channels expected to enter a specific network node via an incoming optical fiber link as allowed channels at said incoming optical fiber link. Other channels, though principally transmittable via said optical fiber link but not expected at the specific network node, are considered not allowed and thus, in response to a control signal from the network controller NC, are to be blocked by the WSOA connected between said incoming optical link and the specific network node.

The network section may be further adapted to determine, whether an optical (possibly, foreign) signal exists in any of the wavelengths blocked by said at least one WSOAs, and if in the affirmative, to provide a suitable indication signal to the network controller NC. For example, a number of per-channel power detectors can be provided in association with at least one of said WSOAs, capable of determining power of signals at the blocked wavelengths, and issuing the indication signal when the determine power is somewhat suspicious.

The network controller NC may be further capable of detecting an attack in the network section in response to the indication signal received from said power detectors, and initiating corresponding security measures to minimize damages of the attack.

The network section may be further provided with at least one monitoring unit (monitor) associated with any optical fiber link of the network section for monitoring optical channels (preferably one or more of the optical channels allowed in said link) and being capable of issuing an alarm signal if an abnormal situation is detected in one or more of said allowed (working) optic channels. The monitor may be located at any optical fiber link of the section, and at any portion of the optic fiber link. If the link comprises a WSOA (i.e. the link is an incoming link of one of the network section nodes), the location of the monitoring unit would preferably be after the WSOA or at the network node receiving traffic from said link.

Such a monitoring unit may, for example, be implemented by accommodating one or more conventional blocks for determining at least one of the following parameters of an optical signal: BER (bit error rate), optical signal-to noise ratio (OSNR), any combined parameter. The abnormal situation should therefore be stated if the measured BER is higher than a predetermined maximal BER value, and/or the measured OSNR value is lower than a preliminarily accepted minimal OSNR value.

The channel monitors associated with a specific optical fiber link may be selectively enabled for monitoring particular optical channels (for example, for monitoring only the allowed channels, by means of the same control signal from NC, used for controlling the respective WSOA).

As has been mentioned with respect to the method, the alarm signals may be reported to the network controller NC for making decisions and taking possible security measures. In this case, the NC should be adapted to collect alarm signals from the working channels monitors and process thereof accordingly (for example, to issue updated control signals to said WSOAs for blocking one or more previously allowed working channels, to perform wavelength conversion, to execute rerouting, etc.)

However, the network section may be provided with at least one local controller LC associated with a WSOA and capable of receiving and immediately processing the alarm signals whenever received with respect to the local optical fiber link connected to the WSOA. The LC may then be adapted to urgently order blocking of the attacked working channel within said WSOA.

Preferably, the LC is in informational and control communication with the NC.

Additionally, as a third aspect of the invention, there is provided a wavelength selective optical amplifier (WSOA) controllable by a control signal and intended to be connected, as an integrated component, in an optical fiber link (for example, a link incoming a network node of a multi-channel optical network, such as a wavelength division multiplexed (WDM) optical communication network),
the WSOA being adapted, when switched in the optical fiber link and controlled by the control signal, to selectively block narrow bands of one or more optical wavelengths among various optical wavelengths incoming said WSOA from the optical fiber link, while amplifying non-blocked wavelengths incoming said WSOA.

The proposed controllable WSOA may thereby secure at least a section of the network from invasion (attacks), by preventing undesired optical signals, if carried by said blocked wavelengths, from being amplified and forwarded to the optical network.

The integrated wavelength selective optical amplifier WSOA may comprise one or more components selected from a list including: a wavelength selective blocker, a tunable filter, a wavelength selective switch, a selective attenuation array; the WSOA also comprises one or more amplifying components (EDFA amplifier(s), Raman amplifier(s), etc).

Preferably, the integrated WSOA is further provided with means (such as power-detectors) for detecting optical signals if carried by one or more wavelengths blocked by said WSOA. Further preferably, the controllable WSOA is adapted to provide information to an outside control unit about wavelengths where said signals (possibly, foreign signals) were detected.

Further preferably, the integrated WSOA is additionally provided with a monitoring unit for monitoring optical signals, preferably in one or more of the allowed Optical channels. The unit preferably comprises channel monitors capable of measuring BER and/or other parameters of optical signals transmitted via various possible optical channels. The channel monitors are preferably arranged so as to selectively monitor the amplified optical channels, and adapted to communicate results of the monitoring to a control unit (external and/or internal).

Optionally, the channel monitors may be selectively activated (enabled) in response to the same control signal used for controlling the WSOA.

Preferably, the integrated. WSOA can be provided with an internal local controller LC which serves a mediator between the integrated WSOA and the NC.

Still preferably, the LC can be adapted :
to collect results of the monitoring from the monitoring unit, based on said results, to determine a fact of invasion and
to produce a local control signal to the WSOA for blocking one or more of the monitored, previously allowed optic channels.

Further preferably, the LC is capable to collect both results of monitoring from the monitoring unit and results of detecting from the detectors, and based on that to check the blocking function of the WSOA.

### Brief description of the drawings

The invention will further be described with reference to the following non-limiting drawings, in which:
**Fig. 1** illustrates one example of an optical network section according to the invention.
**Fig. 2** illustrates one embodiment of a controllable wavelength selective optical amplifier WSOA according to the invention.

### Detailed description of the preferred embodiments

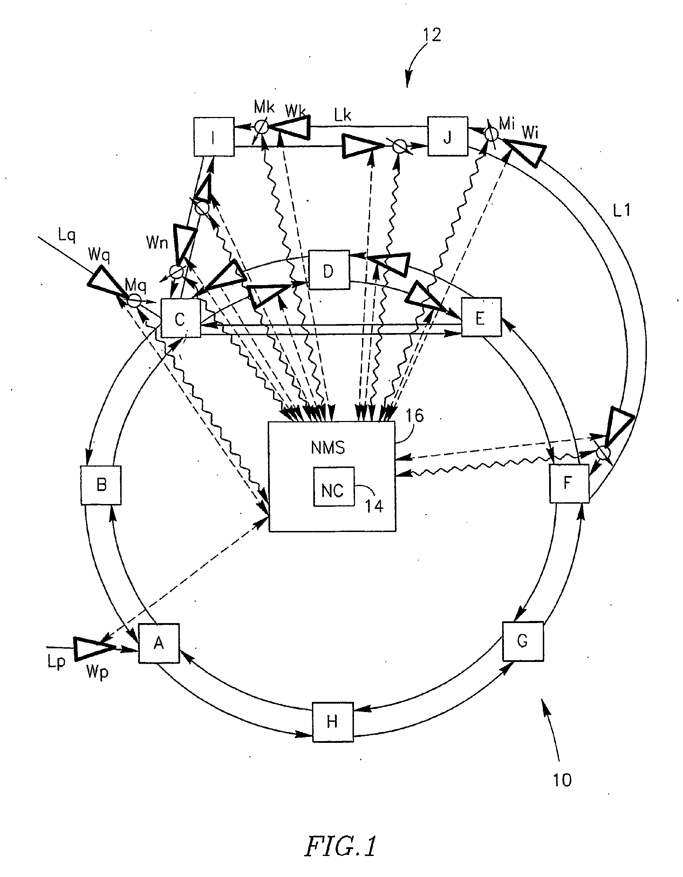

**Fig.1** illustrates one embodiment of a proposed network 10 (being, for example, a combination of a ring-like network and a mesh-like network) where network nodes A, B, ....H, I, J are connected to one another via optical fiber links L1, L2, .... Lk,....Lq (only some links: L1 Lk, Lp, Lq are marked). The optical fiber links usually include dispersion compensation fibers (DCF), optical filters, amplifiers and other relevant optical components that are used for educated operation of optical networks. Such conventional components are not shown in the drawing. The network 10 comprises a Network controller NC 14 which, in this example, is incorporated in a Network Management System (NMS) 16 of the network 10.

In the proposed network 10, the section being most subjected to intruder attacks is a network section 12 that includes territorially remote nodes C, D E, F, J, I and node A which is connected to an external public network and is therefore subjected to invasion; section 12 also includes fiber optic links associated with the section nodes. The network section 12 is provided with special controllable wavelength selective optical amplifiers WSOAs (W1... Wk ... Wq), illustrated as conventional triangles. The WSOAs of the network section 12 are respectively connected in the fiber optic links incoming the network nodes of the section.

The network management system NMS 16 holds topologic data about the network 10, which data is continuously or periodically updated. In this specific example, the Network Controller NC 14 is an additional software entity within the NMS, which holds and updates topologic data concerning the "risky" network section 12 and is responsible for performing the method according to the invention with respect to that network section. The topologic data includes information about optical channels (and their associated wavelengths), which should presently be active in the network section 12, and namely - in each fiber optic link of the network section. The NC is in control communication with each of the WSOAs of section 12, and each of the WSOAs is capable to block any wavelength that, according to a control signal received from the NC 14, should not be present in the corresponding specific fiber link served by that WSOA. Different wavelengths may be allowed for different optical fiber links, and control signals issued by the NC to different links might therefore be different.

Additionally, the network section 12 of Fig. 1 is provided with a number of monitoring units for detecting attacks/malfunctions in the allowed (working) optical channels. These monitoring units M (1... k...t) are shown as circles. Such monitoring unit can be integrated with the respective WSOAs; alternatively, the monitoring units may be part of the respective nodes, or even be separate self-containing devices positioned before or after the WSOAs. Each of the monitoring units is adapted to check one or more parameters of signal transmission (BER, OSNR, etc) in a particular optical channel; these parameters allow determining non-typical or abnormal processes if taking place in the channel. Such processes (and non-typical, drastic measured parameters of BER, OSNR or the like) may serve an indication of an attack in the optical channel. Most preferably, each optical channel in the network section 12 should be monitored using such or similar monitoring units, and at least at one point of the channel in the network section. The monitoring units M are illustrated as being in the bi-directional communication with the NC 14/NMS 16 (see the waved lines). The NC 14 may enable operation of specific monitoring units M according to the updated information about allowed channels at specific points of the network. The monitoring units are adapted to report to the NC about non-typical situations if taking place in a specific channel at the specific point of the network. The NC is capable of: collecting the information from the monitoring units, analyzing the information, making decisions whether any of the allowed channels should now be considered non-allowed due to malfunction or intrusion. In case a specific working optical channel is decided to become non-allowed, the NC instructs suitable WSOAs (selected using the topology information) to block the specific optical channel. Alternatively or in addition, the NC is also capable of issuing an instruction for wavelength conversion or re-routing, in order to secure the traffic under attack.

In Fig. 1, the WSOAs of section 12 are also shown in bi-directional communication with the NC. As has been mentioned, each WSOA receives a control signal from the NC 14. Optionally, at least some WSOAs may provide the NC with information about foreign signals if such are detected in the blocked optical channels.

Based on such information, the NC, for example, may decide about performing wavelength conversion of a working optic channel if any attacked blocked channel is spectrally adjacent to that working channel and therefore may affect it. Alternatively, the NC may select an alternative path in the network to avoid possible damage to the traffic in that working channel.

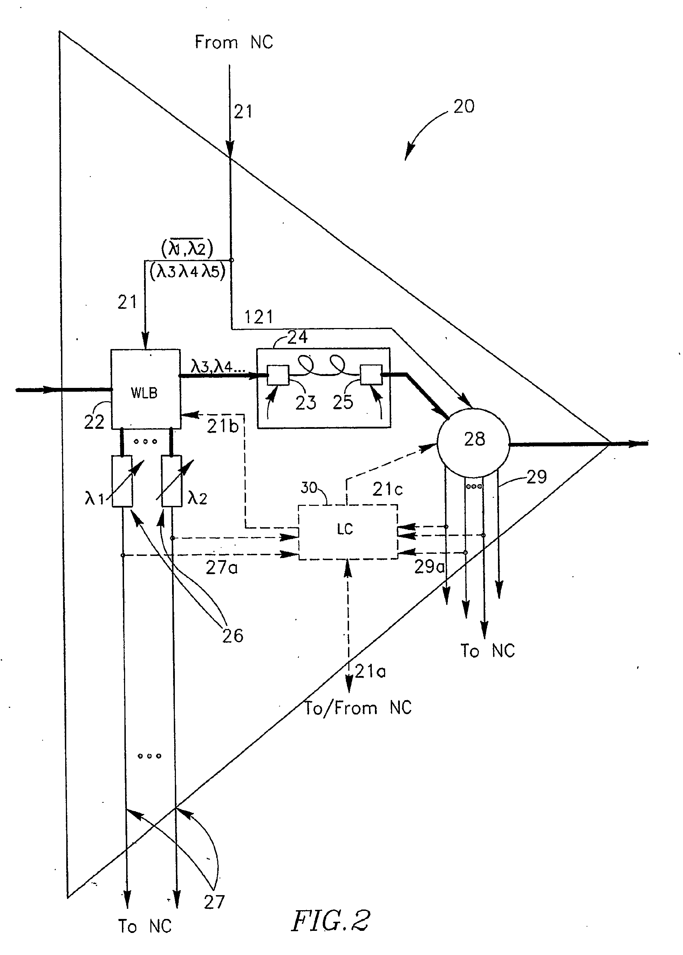

**Fig. 2** illustrates an exemplary implementation of an integrated controllable Wavelength Selective Optical Amplifier (WSOA) 20. The amplifier 20 can be used as a network element, capable of performing both its conventional function and an additional function of wavelength selection and blocking selected optical channels (and also attacked optical channels, if and whenever required). Optional capabilities of the WSOA 20 are for analyzing optical signals: a) in the blocked channels, b) in the allowed channels, and a capability of communicating with an external and possibly also internal control entity. The proposed WSOA is both controllable and reconfigurable.

In this specific embodiment, the proposed integrated WSOA comprises a controlled wavelength blocker 22 integrally connected to an EDFA amplifier 24. The illustrated EDFA amplifier 24 comprises an erbium doped fiber EDF provided with a forward optical pump 23 (for example, for a wavelength of 980 nm) and a backward optical pump 25 (for example for a wavelength of 1480 nm). Alternatively, block 22 may be manufactured based on a tunable filter, a wavelength selective switch WSS, a tunable attenuator array combined with DMUX and MUX, and the like.

Let the incoming multiplexed optical signal comprises wavelengths in the range 1529 to 1560 nm. The wavelength blocker 22 is controllable by a control signal, for example by an external control signal 21 received from the Network Controller NC (see Fig. 1). The control signal 21 comprises information concerning the optical wavelengths which are to be blocked (say, λ1,λ2) and/or the optical wavelengths which are allowed (say, λ3, λ4, λ5, etc.). According to the control signal 21, the wavelength blocker 22 blocks the wavelengths λ1,λ2. Optionally and preferably, the wavelength blocker 22 may perform dropping of the blocked wavelength(s) for further analyzing. Fig. 2 illustrates this option by showing power detectors 26 respectively switched in the dropped blocked optical channels. In case at least one of the detectors 26 detects power in excess of any predetermined reference or in excess of power measured in any other blocked channel, the fact is reported (arrows 27) to an external control entity (NC of Fig. 1). Since the reported fact may indicate that the blocked optical channel was probably attacked, the control entity may take suitable decisions and further regulate the WSOA 20 (by updating signal 21).

The non-blocked wavelengths (those assigned to allowed optical channels according to the proposed method) successfully pass through the wavelength blocker 22 and are then substantially evenly amplified by the EDFA amplifier 24. The amplified allowed channels are then ready to be transmitted to the network.

Additionally, the WSOA 20 may integrally accommodate a monitoring unit (circle 28) intended for monitoring the allowed (working) channels. The monitoring unit 28 can be positioned before or after the amplifier 24, it may even form a part of the block 22. Preferably, the monitoring unit 28 should be able to provide monitoring of each optical channel according to an accepted technology. The monitoring function with respect to particular working wavelengths required for the currently actual configuration can be enabled (activated) by an external control unit, by the same control signal which is used for controlling the block 22. (This signal is marked with an arrow 121).

For example, the monitoring unit 28 is based on measuring BER/OSNR or like parameters of the respective optical signals. In case the monitoring unit 28 detects that a specific working channel carries an abnormal signal from the point of BER/OSNR or the like, it issues at least one alarm signal (arrows 29), which can be transmitted to an external control unit (NC).

In one specific optional embodiment, the WSOA 20 comprises a local controller LC 30 (shown by a dotted contour), which may serve as a mediator between the WSOA and an external control unit such as the NC (see Fig. 1). The LC 30 will then perform the bidirectional communication with the external control unit (see a dotted arrow 21a), both for receiving the control signal for the wavelength blocker 22 (dotted arrow 21b, analogous to the arrow 21), and for reporting to the external control unit about abnormal events in various optical channels (thus performing the functions analogous to those indicated by arrows 27, 29). These events include non-typical values of physical parameters at the blocked channels and at the working channels; information about these events are collected by the local controller LC 30 via dotted arrows 27a and 29a and then reported to the external controller NC.

However, the local control unit 30 may have some autonomic functions. For example, based on the information collected from the monitoring unit 28 via connections (arrows) 29a, the LC 30 may make an urgent local decision to block one or more of the previously allowed working channels. This decision will then be sent to the WLB 22 via the already mentioned connection shown by dotted arrow 21b. Priorities between decisions of the local controller 30 and the external control unit (NC) should be preliminarily defined.

LC 30 can optionally control the monitoring unit 28 via a dotted line 21c for enabling/disabling monitoring of one or more specific wavelengths. This function is analogous to the control function (arrow 121) provided directly by the external controller.

However, if all possible wavelengths are monitored, the LC 30 may collect results of detecting optical signals from the power detectors 26 and results of monitoring optical signals from the monitoring unit 28; based on the collected information, the LC 30 may check whether the wavelength blocker 21 properly blocked all non-desired wavelengths.

It should be appreciated that the invention can be implemented on different configurations of the network, using different implementations of the WSOA and of the NC, an that any of such variations should be considered part of the invention whenever being covered by the claims which follow.

## Claims

1. A method for managing a group of network nodes in a multi-channel optical communication network (10) comprising a plurality of network nodes (A, B, C, D, E, F, G, H, I, J) and a number of optical fiber links (L1, Lk, Lp, Lq), wherein the group comprises at least one network node (A, B, C, D, E, F, G, H, I, J),
the method comprising:
at each specific network node of said group (A, B, C, D, E, F, G, H, I, J), providing at least one wavelength selective optical amplifier WSOA (Wi, Wk, Wp, Wq) in at least one optical fiber link (L1, Lk, Lp, Lq) incoming the specific network node,
providing a network controller NC (14) for holding and updating control information about optical channels allowed in said at least one optical fiber link (L1, Lk, Lp, Lq) incoming said at least one network node (A, B, C, D, E, F, G, H, I, J) of the group, and for supplying each of said at least one wavelength selective amplifier WSOA (Wi, Wk, Wp, Wq) with suitable control information concerning the incoming optical fiber link associated therewith;
at each of said at least one wavelength selective amplifier WSOA (Wi, Wk, Wp, Wq), in response to the control information received from the NC (14), blocking any wavelength incoming the WSOA (Wi, Wk, Wp, Wq) from the incoming optical fiber link (L1, Lk, Lp, Lq) associated therewith, except for wavelengths assigned to the optical channels allowed in said incoming optical fiber link (L1, Lk, Lp, Lq).

2. The method according to Claim 1, comprising additional steps of:
- determining whether one or more of the wavelengths, blocked by any of said WSOA WSOA (Wi, Wk, Wp, Wq), carry optical signals,
- if in the affirmative, issuing an indication signal to the network controller NC 14).

3. The method according to Claim 1 or 2, comprising additional steps of:
- determining whether one or more of the wavelengths, allowed in the optical fiber links (L1, Lk, Lp, Lq) incoming the network nodes (A, B, C, D, E, F, G, H, I, J) of said group, carry signals not satisfying one or more of predetermined criteria,
- if in the affirmative, issuing an alarm signal to the network controller NC (14).

4. The method according to any one of the preceding Claims, further comprising a step of making a decision at said NC (14), that intrusion has been undertaken using one or more of the wavelengths transmittable via the optical fiber links (L1, Lk, Lp, Lq) incoming the network nodes (A, B, C, D, E, F, G, H, I, J) of the group, and a step of initiating one or more security measures.

5. A network section (12) in a multi-channel optical network (10) comprising a plurality of network nodes (A, C, D E, F, J, I) and a number of optical fiber links (L1, Lk, Lp, Lq), wherein the network section (12) comprising:
a group of one or more network nodes (A, C, D E, F, J, I), wherein at each specific network node of the group, at least one optical fiber link (L1, Lk, Lp, Lq) incoming the specific network node is provided with at least one wavelength selective optical amplifier WSOA (Wi, Wk, Wp, Wq),
a network controller NC (14) for holding and updating control information about optical channels allowed in said at least one optical fiber link (Wi, Wk, Wp, Wq) incoming said at least one network node (A, C, D E, F, J, I) of the group, and for supplying each of said at least one wavelength selective amplifier WSOA (Wi, Wk, Wp, Wq) with suitable control information concerning the incoming optical fiber link (Wi, Wk, Wp, Wq) associated therewith;
wherein each of said WSOA is controllable by said network controller NC so as to amplify only wavelengths assigned to the optical channels allowed in the incoming optic fiber link associated with said WSOA, while blocking any other wavelengths.

6. The network section (12) according to Claim 5, wherein the network controller NC (14) holds topology data on at least said network section (12) and, according to said topology data,
- considers optical channels expected to pass via a specific optical fiber link to be allowed optical channels for that specific optical fiber link;
- provides control of the WSOAs (Wi, Wk, Wp, Wq) in the network section (12) according to the topology data, by issuing respective control signals.

7. The network section (12) naccording to Claim 5 or 6, wherein at least one of said WSOAs (Wi, Wk, Wp, Wq) is associated with at least one per-channel detector (26) for determining, whether an optical signal is carried by any of the wavelengths blocked by said at least one WSOAs (Wi, Wk, Wp, Wq); in case the optical signal is detected, said detectors being adapted to provide a suitable indication signal to the network controller NC (14).

8. The network section (12) according to any one of Claims 5 to 7, further provided with at least one monitoring unit (28) associated with an optical fiber link of the network section (12) for monitoring one or more optical channels in said link, the monitoring unit (28) being capable of issuing an alarm signal if one or more traffic criteria are not satisfied in one or more of said optic channels.

9. A wavelength selective optical amplifier (WSOA) (20) and a network controller NC (14), said WSOA being controllable by a control signal supplied by said network controller NC (14) and intended to be connected, as an integrated component, in an optical fiber link;
wherein said network controller NC (14) is adapted to hold and update information about optical channels allowed in said optical fiber link and to supply the WSOA (20) with suitable control information concerning the incoming optical fiber link associated therewith; and wherein
the WSOA(20) is adapted, when switched in the optical fiber link and controlled by the network controller NC (14), to selectively block one or more non allowed optical wavelengths among various optical wavelengths incoming said WSOA (20) from the optical fiber link, while amplifying non-blocked wavelengths incoming said WSOA (20).

10. The WSOA and network controller NC (14) according to Claim 9, said WSOA (20) comprising one or more components selected from a list including: a wavelength selective blocker, a tunable filter, a wavelength selective switch, a selective attenuation array; said WSOA (20) also comprising one or more amplifying components (24).

11. The WSOA (20) and network controller NC (14) according to Claim 9 or 10, said WSOA (20) being further provided with power detectors (26) for detecting optical signals if carried by one or more wavelengths blocked by said WSOA (20), said WSOA. (20) being also operative to provide an indication signal to said network controller NC (14) about wavelengths at which said optical signals are detected.

12. The WSOA (20) and network controller NC (14) according to any one of Claims 9 to 11, said WSOA. (20) being additionally provided with a monitoring unit (28) for monitoring optical signals carried at least by the non-blocked wavelengths, operative to provide an alarm signal to said network controller NC (14) whenever at least one of said optical signals do not satisfy one or more predetermined criteria.

## Patentansprüche

1. Ein Verfahren zur Verwaltung einer Gruppe von Netzwerkknoten in einem optischen Mehrkanal-Kommunikationsnetz (10), umfassend eine Vielzahl von Netzwerkknoten (A, B, C, D, E, F, G, H, I, J) und eine Reihe von Lichtleiter-Verbindungen (L1, Lk, Lp, Lq), wobei die Gruppe mindestens einen Netzwerkknoten (A, B, C, D, E, F, G, H, I, J) umfasst,
wobei das Verfahren Folgendes umfasst:
an jedem bestimmten Netzwerkknoten der Gruppe (A, B, C, D, E, F, G, H, I, J), Bereitstellung mindestens eines wellenlängenselektiven optischen Verstärkers WSOA (Wi, Wk, Wp, Wq) in mindestens einer Lichtleiter-Verbindung (Ll, Lk, Lp, Lq), die beim bestimmten Netzwerkknoten eingeht,
Bereitstellung eines Netzwerk-Controllers NC (14) zum Halten und Aktualisieren von Steuerungsinformationen über optische Kanäle, die in der mindestens einen Lichtleiter-Verbindung (L1, Lk, Lp, Lq) zugelassen sind, welche bei dem mindestens einen Netzwerkknoten (A, B, C, D, E, F, G, H, I, J) der Gruppe eingeht, und zur Versorgung jedes der mindestens einen wellenlängenselektiven Verstärker WSOA (Wi, Wk, Wp, Wq) mit geeigneten Steuerungsinformationen bezüglich der eingehenden Lichtleiter-Verbindung, die damit verknüpft ist,
an jedem der mindestens einen wellenlängenselektiven Verstärker WSOA (Wi, Wk, Wp, Wq), als Reaktion auf die Steuerungsinformationen, die von der NC (14) empfangen werden, das Blocken jeder Wellenlänge, die in den WSOA (Wi, Wk, Wp, Wq) von der damit verknüpften eingehenden Lichtleiter-Verbindung (L1, Lk, Lp, Lq) eingeht, ausgenommen Wellenlängen, die den optischen Kanälen zugewiesen sind, welche in der eingehenden Lichtleiter-Verbindung (L1, Lk, Lp, Lq) zugelassen sind.

2. Das Verfahren gemäß Anspruch 1, das folgende zusätzliche Schritte umfasst:
- Bestimmung, ob eine oder mehrere der Wellenlängen, die von irgendeinem der WSOA (Wi, Wk, Wp, Wq) geblockt sind, optische Signale tragen,
- wenn dies der Fall ist, Ausgabe eines Meldesignals an den Netzwerk-Controller NC (14).

3. Das Verfahren gemäß Anspruch 1 oder 2, das folgende zusätzliche Schritte umfasst:
- Bestimmung, ob eine oder mehrere der Wellenlängen, die in den Lichtleiter-Verbindungen (L1, Lk, Lp, Lq) zugelassen sind, die bei den Netzwerkknoten (A, B, C, D, E, F, G, H, I, J) der Gruppe eingehen, Signale tragen, die eins oder mehrere von vordefinierten Kriterien nicht erfüllen,
- wenn dies der Fall ist, Ausgabe eines Alarmsignals an den Netzwerk-Controller NC (14).

4. Das Verfahren gemäß einem beliebigen der obigen Ansprüche, das weiter einen Schritt des Treffens einer Entscheidung an der NC (14) umfasst, dass ein Eindringen stattgefunden hat, unter Verwendung einer oder mehrerer der Wellenlängen, die über die Lichtleiter-Verbindungen (L1, Lk, Lp, Lq) übertragbar sind, welche an den Netzwerkknoten (A, B, C, D, E, F, G, H, I, J) der Gruppe eingehen, und einen Schritt der Einleitung einer oder mehrerer Sicherheitsmaßnahmen.

5. Ein Netzwerkabschnitt (12) in einem optischen Mehrkanal-Netzwerk (10), der eine Vielzahl von Netzwerkknoten (A, C, D, E, F, J, I) und eine Reihe von Lichtleiter-Verbindungen (L1, Lk, Lp, Lq) umfasst, wobei der Netzwerkabschnitt (12) Folgendes umfasst:
eine Gruppe aus einem oder mehreren Netzwerkknoten (A, C, D, E, F, J, I), wobei an jedem bestimmten Netzwerkknoten der Gruppe mindestens eine Lichtleiter-Verbindung (L1, Lk, Lp, Lq), die an dem bestimmten Netzwerkknoten eingeht, mit mindestens einem wellenlängenselektiven optischen Verstärker WSOA (Wi, Wk, Wp, Wq) ausgestattet ist,
einen Netzwerk-Controller NC (14) zum Halten und Aktualisieren von Steuerungsinformationen über optische Kanäle, die in der mindestens einen Lichtleiter-Verbindung (Wi, Wk, Wp, Wq) zugelassen sind, welche bei dem mindestens einen Netzwerkknoten (A, C, D, E, F, J, I) der Gruppe eingeht, und zur Versorgung jedes der mindestens einen wellenlängenselektiven Verstärker WSOA (Wi, Wk, Wp, Wq) mit geeigneten Steuerungsinformationen bezüglich der damit verknüpften eingehenden Lichtleiter-Verbindung (Wi, Wk, Wp, Wq),
wobei jeder der WSOA so von dem Netzwerk-Controller NC steuerbar ist, dass er nur Wellenlängen verstärkt, die den optischen Kanälen zugewiesen sind, welche in der eingehenden mit dem WSOA verknüpften Lichtleiter-Verbindung zugelassen sind, während alle anderen Wellenlängen geblockt werden.

6. Der Netzwerkabschnitt (12) gemäß Anspruch 5, wobei der Netzwerk-Controller NC (14) topologische Daten über zumindest den Netzwerkabschnitt (12) enthält und, entsprechend den topologischen Daten,
- optische Kanäle, von denen erwartet wird, dass sie über eine bestimmte Lichtleiter-Verbindung verlaufen, als für diese bestimmte Lichtleiter-Verbindung zugelassene optische Kanäle betrachtet,
- durch Ausgabe entsprechender Steuersignale die WSOAs (Wi, Wk, Wp, Wq) im Netzwerkabschnitt (12) entsprechend den Topologiedaten steuert.

7. Der Netzwerkabschnitt (12) gemäß Anspruch 5 oder 6, wobei mindestens einer der WSOAs (Wi, Wk, Wp, Wq) mit mindestens einem Detektor (26) pro Kanal verknüpft ist, zur Ermittlung, ob ein optisches Signal von irgendeiner der Wellenlängen getragen wird, die von den mindestens einen WSOAs (Wi, Wk, Wp, Wq) geblockt werden, wobei die Detektoren ausgebildet sind, um, falls ein optisches Signal erfasst wird, dem Netzwerk-Controller NC (14) ein geeignetes Meldesignal zu liefern.

8. Der Netzwerkabschnitt (12) gemäß einem beliebigen der Ansprüche 5 bis 7, weiter ausgestattet mit mindestens einer Überwachungseinheit (28), die mit einer Lichtleiter-Verbindung des Netzwerkabschnitts (12) zur Überwachung eines oder mehrerer optischer Kanäle in der Verbindung verknüpft ist, wobei die Überwachungseinheit (28) ein Alarmsignal ausgeben kann, wenn ein oder mehrere Verkehrskriterien in einem oder mehreren der optischen Kanäle nicht erfüllt werden.

9. Ein wellenlängenselektiver optischer Verstärker (WSOA) (20) und ein Netzwerk-Controller NC (14), wobei der WSOA von einem Steuersignal gesteuert werden kann, das von dem Netzwerk-Controller NC (14) geliefert wird, und dazu bestimmt ist, als integrierter Bestandteil in eine Lichtleiter-Verbindung angeschlossen zu werden,
wobei der Netzwerk-Controller NC (14) ausgebildet ist, um Informationen über optische Kanäle zu halten und zu aktualisieren, die in der Lichtleiter-Verbindung zugelassen sind, und um den WSOA (20) mit geeigneten Steuerungsinformationen bezüglich der damit verknüpften eingehenden Lichtleiter-Verbindung zu versorgen, und wobei
der WSOA (20) ausgebildet ist, wenn er in der Lichtleiter-Verbindung geschaltet und von dem Netzwerk-Controller NC (14) gesteuert wird, um eine oder mehrere nicht zugelassene optische Wellenlängen unter verschiedenen optischen Wellenlängen, die vom Lichtwellenleiter bei dem WSOA (20) eingehen, selektiv zu blocken und gleichzeitig nicht geblockte Wellenlängen, die bei dem WSOA (20) eingehen, zu verstärken.

10. Der WSOA und der Netzwerk-Controller NC (14) gemäß Anspruch 9, wobei der WSOA (20) ein oder mehrere Komponenten umfasst, gewählt aus einer Liste, die Folgendes einschließt: einen wellenlängenselektiven Blockierer, ein durchstimmbares Filter, einen wellenlängenselektiven Schalter, ein selektives Dämpfungsarray, wobei der WSOA (20) auch eine oder mehrere Verstärkungskomponenten (24) umfasst.

11. Der WSOA (20) und der Netzwerk-Controller NC (14) gemäß Anspruch 9 oder 10, wobei der WSOA (20) weiter mit Leistungsdetektoren (26) zur Erfassung optischer Signale, wenn sie von einer oder mehreren Wellenlängen getragen werden, die von dem WSOA (20) geblockt werden, ausgestattet ist, wobei der WSOA (20) auch arbeitet, um dem Netzwerk-Controller NC (14) ein Meldesignal über Wellenlängen zu liefern, bei denen die optischen Signale erfasst werden.

12. Der WSOA (20) und der Netzwerk-Controller NC (14) gemäß einem beliebigen der Ansprüche 9 bis 11, wobei der WSOA (20) zusätzlich mit einer Überwachungseinheit (28) zur Überwachung optischer Signale ausgestattet ist, die zumindest von den nicht geblockten Wellenlängen getragen werden, die operativ ist, um dem Netzwerk-Controller NC (14) immer dann ein Alarmsignal zu liefern, wenn mindestens eines der optischen Signale ein oder mehrere vordefinierte Kriterien nicht erfüllt.

## Revendications

1. Méthode de gestion d'un groupe de noeuds de réseau dans un réseau de communication optique (10) à canaux multiples, comprenant une pluralité de noeuds de réseau (A, B, C, D, E, F, G, H, I, J) et une pluralité de liaisons par fibre optique (L1, Lk, Lp, Lq), dans lequel le groupe comprend au moins un noeud de réseau (A, B, C, D, E, F, G, H, I, J),
le procédé comprenant :
à chaque noeud de réseau spécifique dudit groupe (A, B, C, D, E, F, G, H, I, J), fourniture d'au moins un amplificateur optique sélectif en longueur d'onde WSOA (Wi, Wk, Wp, Wq) dans au moins une liaison par fibre optique (L1, Lk, Lp, Lq) entrant dans le noeud de réseau spécifique,
fourniture d'un contrôleur de réseau NC (14), pour conserver et mettre à jour une information de commande concernant des canaux optiques autorisés dans ladite au moins une liaison par fibre optique (L1, Lk, Lp, Lq) entrant dans ledit au moins un noeud de réseau (A, B, C, D, E, F, G, H, I, J) du groupe, et pour fournir à chacun desdits au moins un amplificateur sélectif en longueur d'onde WSOA (Wi, Wk, Wp, Wq) une information de commande appropriée, concernant la liaison par fibre optique entrante lui étant associée ;
à chacun desdits au moins un amplificateur sélectif en longueur d'onde WSOA (Wi, Wk, Wp, Wq), en réponse à l'information de commande reçue du NC (14), assurer le blocage de toute longueur d'onde entrant dans le WSOA (Wi, Wk, Wp, Wq) en provenance de la liaison par fibre optique (L1, Lk, Lp, Lq) entrante lui étant associée, sauf pour des longueurs d'onde affectées aux canaux optiques autorisés dans ladite liaison par fibre optique (L1, Lk, Lp, Lq) entrante.

2. Méthode selon la revendication 1, comprenant les étapes additionnelles consistant à :
- déterminer si une ou plusieurs des longueurs d'onde, bloquées par l'un quelconque desdits WSOA (Wi, Wk, Wp, Wq), transporte des signaux optiques,
- si l'on se trouve dans l'affirmative, envoyer un signal d'indication au contrôleur de réseau NC (14).

3. Méthode selon la revendication 1 ou 2, comprenant les étapes additionnelles consistant à :
- déterminer si une ou plusieurs des longueurs d'onde, autorisées dans les liaisons par fibre optique (L1, Lk, Lp, Lq) entrant dans les noeuds de réseau (A, B, C, D, E, F, G, H, I, J) dudit groupe, transportent des signaux ne satisfaisant pas à un ou plusieurs des critères prédéterminés,
- si l'on se trouve dans l'affirmative, envoyer un signal d'alarme au contrôleur de réseau NC (14).

4. Méthode selon l'une quelconque des revendications précédentes, comprenant en outre une étape de prise de décision, audit NC (14), du fait de l'intrusion a été effectuée en utilisant une ou plusieurs des longueurs d'onde transmissibles vis les liaisons par fibre optique (L1, Lk, Lp, Lq) entrant dans les noeuds de réseau (A, B, C, D, E, F, G, H, I, J) du groupe, et une étape d'initialisation d'une ou plusieurs dispositions de sécurité.

5. Section de réseau (12) dans un réseau de communication optique (10) à canaux multiples, comprenant une pluralité de noeuds de réseau (A, C, D, E, F, J, I) et une pluralité de liaisons par fibre optique (L1, Lk, Lp, Lq), dans lequel la section de réseau (12) comprend :
un groupe d'un ou plusieurs noeuds de réseau (A, C, D, E, F, J, I), dans lequel, à chaque noeud de réseau spécifique du groupe, au moins une liaison par fibre optique (L1, Lk, Lp, Lq) entrant dans le noeud de réseau spécifique est munie d'au moins un amplificateur optique sélectif en longueur d'onde WSOA (Wi, Wk, Wp, Wq),
un contrôleur de réseau NC (14), pour conserver et mettre à jour une information de commande concernant des canaux optiques autorisés dans ladite au moins une liaison par fibre optique (L1, Lk, Lp, Lq) entrant dans ledit au moins un noeud de réseau (A, C, D, E, F, J, I) du groupe, et pour fournir à chacun desdits au moins un amplificateur sélectif en longueur d'onde WSOA (Wi, Wk, Wp, Wq) une information de commande appropriée, concernant la liaison par fibre optique (L1, Lk, Lp, Lq) entrante lui étant associée ;
dans lequel chacun desdits WSOA est susceptible d'être commandé par ledit contrôleur de réseau, de manière à amplifier seulement les longueurs d'onde affectées aux canaux optiques autorisés dans ladite liaison par fibre optique entrante, associée audit WSOA, tout en bloquant d'éventuelles autres longueurs d'onde.

6. Section de réseau (12) selon la revendication 5, dans laquelle le contrôleur de réseau NC (14) conserve des données de topologie sur ladite au moins une section de réseau (12) et, selon lesdites données de topologie,
- considère des canaux optiques, dont on escompte qu'ils passent via une liaison par fibre optique spécifique, comme étant des canaux optiques autorisés pour cette liaison par fibre optique spécifique ;
- fournit une commande des WSOAs (Wi, Wk, Wp, Wq) dans la section de réseau (12)à selon les données de topologie, par envoi de signaux de commande respectifs.

7. Section de réseau (12) selon la revendication 5 ou 6, dans laquelle au moins l'un desdits WSOAs (Wi, Wk, Wp, Wq) est associé avec au moins un détecteur par canal (26), pour déterminer si un signal optique est transporté par l'une quelconque des longueurs d'onde bloquées par ledit au moins l'un WSOAs (Wi, Wk, Wp, Wq) ; dans le cas où le signal optique est détecté, lesdits détecteurs étant adaptés pour fournir un signal d'indication approprié au contrôleur de réseau NC (14).

8. Section de réseau (12) selon l'une quelconque des revendications 5 à 7, munie en outre d'au moins une unité de surveillance (28) associée à une liaison par fibre optique de la section de réseau (12), pour surveiller un ou plusieurs canaux optiques dans ladite liaison, l'unité de surveillance (28) étant capable d'émettre un signal d'alarme si un ou plusieurs critères de trafic ne sont pas satisfaits dans un ou plusieurs desdits canaux optiques.

9. Amplificateur optique sélectif en longueur d'onde (WSOA) (20) et un contrôleur de réseau NC (14), ledit WSOA étant susceptible d'être commandé par un signal de commande fourni par ledit contrôleur de réseau NC (14) et prévu pour être connecté, en tant que composant intégré, dans une liaison par fibre optique ;
dans lequel ledit contrôleur de réseau NC (14) est adapter pour conserver et mettre à jour une information concernant des canaux optiques autorisés dans ladite liaison par fibre optique, et pour fournir au WSOA (20) une information de commande appropriée, concernant la liaison par fibre optique entrante lui étant associée ; et dans lequel
le WSOA (20) est adapté, lorsqu'il est commuté dans la liaison par fibre optique et commandé par le contrôleur de réseau NC (14), pour bloquer sélectivement une ou plusieurs longueurs d'onde optiques non autorisées parmi diverses longueurs d'onde optiques entrant dans ledit WSOA (20) en provenant de la liaison par fibre optique, tout en amplifiant les longueurs d'onde non bloquées entrant dans ledit WSOA (20).

10. WSOA et contrôleur de réseau NC (14) selon la revendication 9, ledit WSOA (20) comprenant un ou plusieurs composants sélectionnés dans une liste incluant : un bloqueur sélectif en longueur d'onde, un filtre accordable, un commutateur sélectif en longueur d'onde, un réseau d'atténuation sélectif ; ledit WSOA (20) comprenant également un ou plusieurs composants amplificateurs (24).

11. WSOA (20) et contrôleur de réseau NC (14) selon la revendication 9 ou 10, ledit WSOA (20) étant en outre muni de détecteurs de puissance (26), pour détecter des signaux optiques s'il en est transporté par une ou plusieurs longueurs d'onde bloquées par ledit WSOA (20), ledit WSOA (20) agissant également pour fournir un signal d'indication audit contrôleur de réseau NC (14), concernant des longueurs d'onde auxquelles lesdits signaux optiques sont détectés.

12. WSOA (20) et contrôleur de réseau NC (14) selon l'une quelconque des revendications 9 à 11, ledit WSOA (20) étant en plus pourvu d'une unité de surveillance (28) pour surveiller des signaux optiques portés au moins par les longueurs d'onde non bloquées, agissant pour fournir un signal d'alarme audit contrôleur de réseau NC (14), si au moins l'un des signaux optiques ne satisfait pas à un ou plusieurs critères prédéterminés.
